# EUROPÄISCHE PATENTSCHRIFT

(11) **EP 0 670 450 B1**
(45) Veröffentlichungstag und Bekanntmachung des Hinweises auf die Patenterteilung: **01.07.1998**
(21) Anmeldenummer: 95102896.8
(22) Anmeldetag: 01.03.1995
(51) Int. Cl.: F16L 59/12, F16L 3/04

(54) **Befestigungsschelle**
Fastening clamp
Collier de fixation

(30) Priorität: 01.03.1994 DE 9403449 U
(43) Veröffentlichungstag der Anmeldung: 06.09.1995
(73) Patentinhaber: E. Missel GmbH, D-70374 Stuttgart (DE)
(72) Erfinder:
(74) Vertreter: Finsterwald, Manfred, Dipl.-Ing., Dipl.-Wirtsch.-Ing.

(56) Entgegenhaltungen:
- EP-A- 0 158 188
- EP-A- 0 573 755
- CH-A- 581 288
- CH-A- 669 649
- DE-A- 1 909 284
- DE-A- 3 025 601
- DE-B- 1 282 759
- GB-A- 632 037
- GB-A- 1 188 835
- US-A- 3 606 218
- US-A- 4 338 707

## Beschreibung

Die Erfindung betrifft eine Vorrichtung zur bodenseitigen Befestigung von mit einer Wärme- und / oder Schalldämmung ummantelten Rohren.

Derartige Befestigungen werden benötigt, um im Fußboden verlegte Rohre, wie zum Beispiel Heizkörper- oder Brauchwasser-Anschlußrohre am Rohfußboden zu fixieren, um anschließend die über dem Rohfußboden vorzusehenden Dämmaterialien wie Wärme- und Trittschalldämmung sowie den Estrich problemlos aufbringen zu können.

Zur Befestigung der gedämmten Rohre werden im wesentlichen U-förmige Befestigungsbügel verwendet, die aus einem Basisbereich und zwei mit diesem verbundenen Schenkeln bestehen und einen Aufnahmebereich für das Rohr definieren, wobei an dem dem Basisbereich abgewandten Endbereich eines Schenkels eine beispielsweise mittels einer Bodenschraube bodenseitig anbringbare Befestigungslasche vorgesehen ist. Der Basisbereich des U-förmigen Befestigungsbügels ist dabei bei bekannten Befestigungsvorrichtungen im wesentlichen halbrund ausgebildet, damit zum Zweck einer möglichst guten und stabilen Befestigung ein flächiger Kontakt zwischen dem Basisbereich des Befestigungsbügels und dem zu befestigenden Rohr bzw. der das Rohr umgebenden, im Querschnitt kreisrunden Rohrdämmung sichergestellt ist.

Nachteilig an den bekannten Befestigungsvorrichtungen ist, daß zumindest der Basisbereich des Befestigungsbügels bei einem entsprechend großen Rohr- bzw. Rohrdämmungsdurchmesser bis an den Estrich heranreicht, wodurch Schallbrücken zwischen dem Rohfußboden und dem Estrich entstehen, die den üblichen und auch normativ vorgeschriebenen Trittschallschutz beeinträchtigen.

Weiterhin ist bei den bekannten Befestigungsvorrichtungen von Nachteil, daß sie aufgrund des halbkreisförmig gekrümmten Basisbereichs nur für runde Rohrdämmungen verwendet werden können. Rohre mit rechteckiger Dämmung, welche sich mittlerweile als für die bodenseitige Verlegung von gedämmten Rohren als besonders vorteilhaft erwiesen hat, können daher mit den bekannten Befestigungsvorrichtungen nicht am Boden befestigt werden.

Ein weiterer Nachteil der bekannten Befestigungsvorrichtungen besteht darin, daß für jeden Rohr- bzw. Rohrdämmungsdurchmesser eine an diesen Durchmesser angepaßte Befestigungsvorrichtung bereitgestellt werden muß, was hinsichtlich Herstellung und Vertrieb mit einem erhöhten Aufwand verbunden ist.

Der Erfindung liegt die Aufgabe zugrunde, eine Befestigungsvorrichtung der eingangs genannten Art so auszubilden, daß zwischen Rohfußboden und Estrich nur möglichst kleine bzw. überhaupt keine Schallbrücken auftreten können. Insbesondere soll die erfindungsgemäße Vorrichtung auch zur bodenseitigen Befestigung von mit im Querschnitt rechteckigen Dämmungen versehenen Rohren geeignet sein. Schließlich ist es insbesondere auch ein Ziel der Erfindung, eine Vorrichtung der eingangs genannten Art so auszubilden, daß sie für Rohre bzw. Rohrdämmungen mit verschiedenen Abmessungen verwendbar ist.

Diese Aufgaben werden durch die Vorrichtung gemäß Anspruch 1 bzw. durch die Kombinationen gemäß der Ansprüche 6 und 9 gelöst.

Gemäß einer ersten Lösungsvariante wird die Aufgabe zumindest im wesentlichen dadurch gelöst, daß eine eingangs genannte Vorrichtung mit einem im wesentlichen U-förmigen Befestigungsbügel, der aus einem Basisbereich und zwei mit diesem verbundenen Schenkeln besteht und einen Aufnahmebereich für ein Rohr definiert und einer am dem Basisbereich abgewandten Endbereich eines Schenkels angeordneten, bodenseitig anbringbaren Befestigungslasche so ausgebildet wird, daß zumindest der Basisbereich an seiner dem Aufnahmebereich abgewandten Oberfläche mit einem weichfedernden Dämmaterial belegt ist, um die Körperschallübertragung im Fußbodenbereich wirksam zu unterbrechen oder zumindest zu mindern und so normierte bzw. geforderte Trittschallpegel einhalten zu können.

Bei dieser ersten Lösungsvariante wird die dem Aufnahmebereich abgewandte Oberfläche des Basisbereichs in der Weise mit einem weichfedernden Dämmaterial belegt, daß der nach dem Verlegen der Rohre aufgebrachte Estrich ausschließlich in Kontakt mit dem weichfedernden Dämmaterial und nicht etwa mit dem Befestigungsbügel selbst kommt. So ergibt sich eine wirksame Körperschallentkopplung zwischen Estrich und Befestigungsbügel bzw. zwischen Estrich und dem mit dem Befestigungsbügel über die Befestigungslasche verbundenen Rohfußboden.

Gemäß einer zweiten erfindungsgemäßen Lösungsvariante wird eine Vorrichtung der eingangs genannten Art mit einem Basiswinkel und einem Auflagewinkel versehen, die jeweils einander flächig berührende Horizontalschenkel aufweisen, welche derart miteinander koppelbar sind, daß ihre sich jeweils senkrecht zu den Horizontalschenkeln erstreckenden Vertikalschenkel parallel nebeneinander in unterschiedlichem Abstand zueinander justierbar sind, wobei zwischen den beiden Vertikalschenkeln ein Aufnahmebereich für ein Rohr definiert ist, dessen durch die Schenkellängen bestimmte Höhe kleiner als die Vertikalabmessungen des aufzunehmenden, gedämmten Rohres ist.

Bei der zweiten Lösungsvariante erstrecken sich die beiden Vertikalschenkel mit ihren freien Enden nach oben, wobei ihre Länge so bemessen ist, daß die Höhe des zwischen den Vertikalschenkeln definierten Aufnahmebereichs geringer als die Vertikalabmessungen des aufzunehmenden, gedämmten Rohres ist. Hierdurch wird gewährleistet, daß sich die Befestigungsvorrichtung gemäß dieser erfindungsgemäßen Lösungsvariante bzw. deren Vertikalschenkel keinesfalls von unten bis an den Bereich des Estrichs heran erstrecken. Es kommt lediglich die Oberseite der Rohrdämmung mit dem Estrich in Berührung. Auf diese Weise wird ein direkter Kontakt der erfindungsgemäßen Befestigungsvorrichtung mit dem Estrich vermieden, weshalb zwischen Estrich und Befestigungsvorrichtung auch keine Schallbrücken entstehen können. Befestigungsvorrichtung und Estrich stehen lediglich über das das Rohr umgebende Dämmaterial miteinander in Verbindung, wobei dieses Dämmaterial so ausgebildet wird, daß es schalldämmend wirkt und somit keine Körperschallübertragung zwischen Befestigungsvorrichtung und Estrich zuläßt.

Gemäß einer dritten erfindungsgemäßen Lösungsvariante wird eine Vorrichtung der eingangs genannten Art als im'wesentlichen U-förmiger Befestigungsbügel ausgebildet, der aus einem Basisbereich und zwei mit diesem verbundenen Schenkeln besteht und einen Aufnahmebereich für ein Rohr definiert, wobei der Basisbereich insbesondere mittels einer Schraubverbindung direkt mit dem Boden verbindbar und die Länge der Schenkel kürzer als die Vertikalabmessungen des aufzunehmenden, gedämmten Rohres ist.

Die Funktion der Befestigungsvorrichtung gemäß der dritten erfindungsgemäßen Lösungsvariante entspricht derjenigen der zweiten Lösungsvariante, da auch hier sich mit ihren freien Enden nach oben erstreckende Vertikalschenkel vorgesehen sind, deren Länge so bemessen ist, daß zwischen der Befestigungsvorrichtung und dem Estrich kein direkter Kontakt entstehen kann.

Die Erfindung wird im folgenden anhand von Beispielen unter Bezugnahme auf die Figuren beschrieben:
- Figur 1: eine perspektivische Ansicht einer erfindungsgemäßen Vorrichtung gemäß der ersten Lösungsvariante,
- Figur 2: eine in einen Fußbodenaufbau integrierte Vorrichtung gemäß Figur 1,
- Figur 3: eine perspektivische Ansicht einer erfindungsgemäßen Vorrichtung gemäß der zweiten Lösungsvariante,
- Figur 4: eine in einen Fußbodenaufbau integrierte Vorrichtung gemäß Figur 3,
- Figur 5: eine perspektivische Ansicht einer erfindungsgemäßen Vorrichtung gemäß der dritten Lösungsvariante, und
- Figur 6 a und Figur 6 b: eine Vorrichtung gemäß Figur 5 mit darin auf genommenen, mit unterschiedlichen Dämmungen versehenen Rohren.

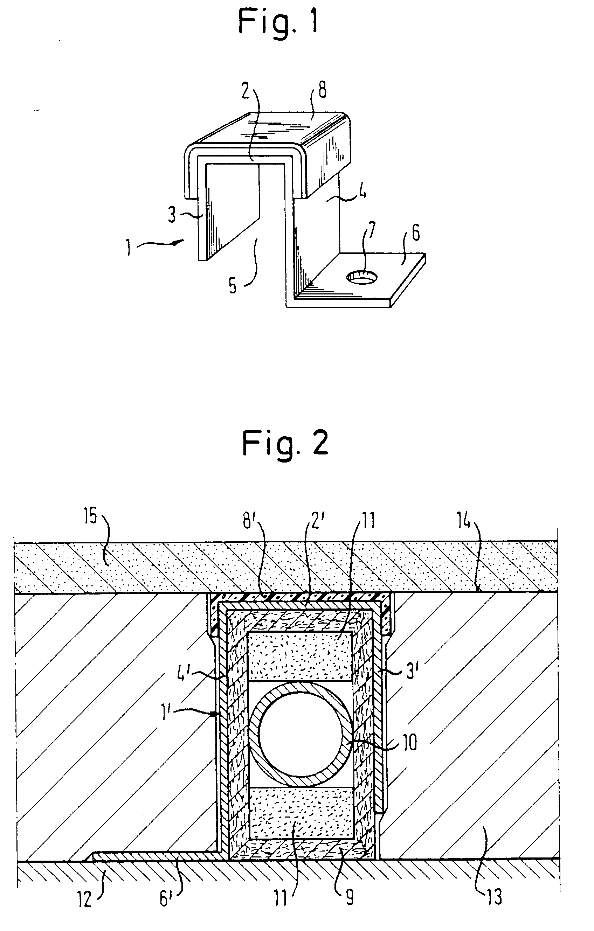

Figur 1 zeigt eine Vorrichtung mit einem im wesentlichen U-förmigen Befestigungsbügel 1, der aus einem geraden Basisbereich 2 und zwei rechtwinklig zu diesem angeordneten Schenkeln 3, 4 besteht, wobei zwischen den beiden Schenkeln 3, 4 ein Aufnahmebereich 5 für ein Rohr definiert ist.

Die beiden Schenkel 3, 4 weisen unterschiedliche Länge auf, wobei der längere Schenkel 4 mit einer sich rechtwinklig zu diesem erstreckenden Befestigungslasche 6 versehen ist, welche eine Bohrung 7 aufweist, die zur bodenseitigen Befestigung der Vorrichtung mittels einer Bodenschraube dient.

Der Befestigungsbügel 2, 3, 4 und die Befestigungslasche 6 sind dabei aus einem durchgehenden, entsprechend gebogenen Metall- bzw. Blechstreifen gebildet. Es ist jedoch ebenso möglich, die Vorrichtung aus Kunststoff zu fertigen.

Der Basisbereich 2 ist an seiner dem Aufnahmebereich 5 abgewandten Oberfläche mit einem weichfedernden Dämmaterial 8 belegt, welches sich bis in die dem Basisbereich 2 zugewandten Endbereiche der Außenflächen der Schenkel 3, 4 erstreckt.

Das Dämmaterial 8 besteht dabei aus einem Schaum oder einem Schaum-Vlies-Verbund und ist an seiner dem Basisbereich 2 abgewandten Seite mit einer reißfesten Oberfläche versehen, um so Oberflächenbeschädigungen des Dämmaterials während der Montage- und Bauarbeiten zu vermeiden.

Figur 2 zeigt eine Vorrichtung gemäß Figur 1, die in einen Fußbodenaufbau integriert ist.

Entsprechend Figur 1 besteht die Vorrichtung aus einem Befestigungsbügel 1', welcher zwei unterschiedlich lange Schenkel 3', 4' sowie einen die beiden Schenkel 3', 4' miteinander verbindenden Basisbereich 2' aufweist. Der längere Schenkel 4' ist dabei mit einer bodenseitig befestigbaren Lasche 6' verbunden. Die dem zwischen den Schenkeln 3', 4' ausgebildeten Aufnahmebereich für ein Rohr abgewandten Oberflächen des Basisbereichs 2' sowie die oberen Endbereiche der Schenkel 3', 4' sind mit einem weichfedernden Dämmaterial 8' belegt.

In dem zwischen den Schenkeln 3', 4' ausgebildeten Aufnahmebereich ist eine im Querschnitt rechteckige Dämmhülse 9 aufgenommen, an welcher die Schenkel 3', 4' sowie der Basisbereich 2' flächig anliegen. In der rechteckigen Dämmhülse 9 wiederum ist ein Rohr 10 aufgenommen, wobei der zwischen den Innenseiten der Dämmhülse 9 und dem Rohr bestehende Freiraum im wesentlichen mit Dämmaterial 11 aufgefüllt ist, das sowohl oberhalb als auch unterhalb des Rohres 10 angeordnet ist.

Über dem Boden 12, mit welchem die Befestigungslasche 6' fest verbunden ist, befindet sich eine Wärme- und / oder Trittschalldämmung 13, die an ihrer Oberseite bündig mit dem Basisbereich 2' des Befestigungsbügels 1' abschließt. Über der Wärme- und / oder Trittschalldämmung 13 ist eine Estrich-Schicht 15 angeordnet.

Diejenige Grenzschicht 14, in der Wärme- und / oder Trittschalldämmung 13 und Estrich 15 aneinandergrenzen, ist somit in einem Abstand vom Boden 12 angeordnet, der der vertikalen Abmessung des Befestigungsbügels 1' entspricht.

Wenn das erfindungsgemäße weichfedernde Dämmaterial 8' in einer Anordnung gemäß Figur 2 nicht vorhanden wäre, würde zwischen Befestigungsbügel 1' und Estrich 15 ein direkter Kontakt bestehen, welcher zu einer über den Befestigungsbügel 1' und die Befestigungslasche 6' wirkenden Schallbrücke führen würde.

Durch die Vorsehung des Dämmaterials 8' wird ein derartiger Kontakt jedoch vermieden, da das Dämmaterial 8' so angeordnet ist, daß derjenige Bereich des Befestigungsbügels 1', der mit dem Estrich 15 in Berührung kommen könnte, vom Dämmaterial 8' abgedeckt ist. Somit besteht zwischen Befestigungsbügel 1' und Estrich 15 nur ein indirekter Kontakt über das Dämmaterial 8', welches eine Körperschallentkopplung von Estrich 15 und Befestigungsbügel 1' bewirkt.

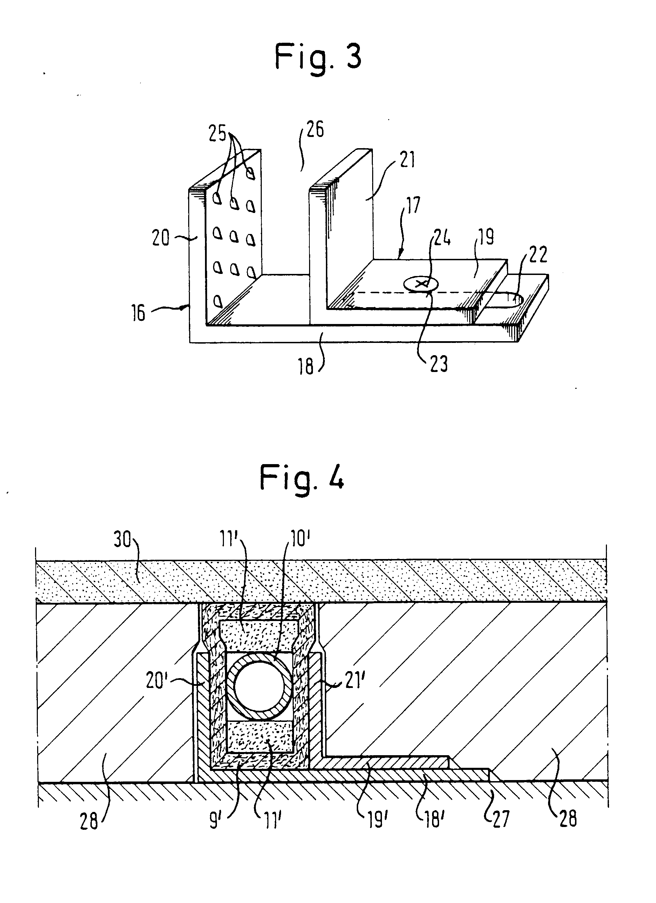

Figur 3 zeigt eine Vorrichtung gemäß der zweiten Lösungsvariante, die aus einem Basiswinkel 16 und einem Auflagewinkel 17 besteht, welche jeweils einander flächig berührende Horizontalschenkel 18, 19, sowie sich senkrecht dazu erstreckende Vertikalschenkel 20, 21 aufweisen.

Die Länge des Horizontalschenkels 18 des Basiswinkels 16 ist größer als die Länge des Horizontalschenkels 19 des Auflagewinkels 17. Bevorzugt beträgt das entsprechende Längenverhältnis ungefähr 2 : 1.

Die Länge des Vertikalschenkels 21 des Auflagewinkels 17 ist gleich der um die Stärke des Horizontalschenkels 18 des Basiswinkels 16 verringerten Länge des Vertikalschenkels 20 des Basiswinkels 16.

Der Horizontalschenkel 18 ist mit einem in Längsrichtung des Horizontalschenkels 18 angeordneten Langloch 22 versehen, welches sich ungefähr vom in Schenkellängsrichtung gesehen mittleren Bereich des Horizontalschenkels 18 bis in den dem Vertikalschenkel 20 abgewandten Endbereich des Horizontalschenkels 18 erstreckt.

Der Horizontalschenkel 19 des Auflagewinkels 17 ist mit einer im wesentlichen mittig angeordneten Bohrung 23 versehen, wobei die Bohrung 23 und das Langloch 22 zur Aufnahme einer Bodenschraube 24 ausgebildet sind, mit der Basis- 16 und Auflagewinkel 17 miteinander und mit dem Boden verbindbar sind.

Die einander zugewandten Oberflächen der beiden Vertikalschenkel 20, 21 sind mit widerhakenähnlichen Elementen 25 versehen, die einem Herausbewegen eines Rohres bzw. einer Rohrdämmung aus dem zwischen den beiden Vertikalschenkeln 20, 21 ausgebildeten Aufnahmebereich 26 entgegenwirken.

Beim Montieren einer Vorrichtung gemäß Figur 3 wird zuerst der Boden mit einer Bohrung versehen, über welcher der Basiswinkel 16 und der Auflagewinkel 17 mit dem Langloch 22 bzw. mit der Bohrung 23 ausgerichtet werden, wobei anschließend die Bodenschraube 24 durch die Bohrung 23 und das Langloch 22 in die im Boden vorgesehene Bohrung eingeführt, jedoch noch nicht festgezogen wird.

In diesem Zustand ist der Basiswinkel 16 aufgrund des in seinem Horizontalschenkel 18 ausgebildeten Langlochs 22 unter dem über die Schraube 24 und die Bohrung 23 translatorisch fixierten Auflagewinkel 17 in der Weise verschiebbar, daß der Vertikalschenkel 20 des Basiswinkels 16 in einem gewünschten Abstand vom Vertikalschenkel 21 des Auflagewinkels 17 justiert werden kann. Sobald der gewünschte Abstand zwischen den beiden Vertikalschenkeln 20, 21 eingestellt ist, wird die Schraube 24 angezogen, wodurch Auflagewinkel 17 und Basiswinkel 16 relativ zueinander und auch relativ zum Boden in der eingestellten Position fixiert werden. Anschließend kann ein gedämmtes Rohr in den Aufnahmebereich 26 eingeführt werden, wodurch sich eine Anordnung gemäß Figur 4 ergibt.

Figur 4 zeigt ebenfalls einen Basiswinkel mit einem Horizontalschenkel 18' und einem Vertikalschenkel 20' sowie einen Auflagewinkel mit einem Horizontalschenkel 19' und einem Vertikalschenkel 21', wobei zwischen den beiden Vertikalschenkeln 20', 21' ein Aufnahmebereich für ein gedämmtes Rohr ausgebildet ist.

In diesen Aufnahmebereich ist ein entsprechend Figur 2 mit Dämmaterial 9', 11' ummanteltes Rohr 10' eingeführt, wobei der horizontale Abstand zwischen den beiden Vertikalschenkeln 20', 21' so eingestellt wurde, daß er etwas kleiner als die äußeren Querabmessungen der rechteckigen Dämmhülse 9' ist. Auf diese Weise wird die das Rohr 10' umgebende Dämmung 9', 11' beim Einführen in den Aufnahmebereich in Horizontalrichtung leicht zusammengedrückt, wodurch sich ein besserer Halt des gedämmten Rohres 10' in dem zwischen den beiden Vertikalschenkeln 20', 21' ausgebildeten Aufnahmebereich ergibt. Dieser Halt wird zusätzlich durch die in Figur 4 nicht sichtbaren widerhakenähnlichen Elemente an den einander zugewandten Oberflächen der beiden Vertikalschenkel 20', 21' gewährleistet.

Über dem Boden 27, mit welchem die beiden Horizontalschenkel 18', 19' mittels einer nicht dargestellten Bodenschraube fest verbunden sind, erstreckt sich eine Wärme- und / oder Trittschalldämmung 28. Oberhalb der Wärme- und / oder Trittschalldämmung 28 ist eine Estrich-Schicht 30 angeordnet.

Die Länge der beiden Vertikalschenkel 20', 21' ist so bemessen, daß sie unterhalb der Estrich-Schicht 30 enden.

Durch die Längsabmessungen der Vertikalschenkel 20', 21' wird erreicht, daß zwischen der Befestigungsvorrichtung und der Estrich-Schicht 30 kein direkter Kontakt besteht, wodurch Schallbrücken zwischen Estrich-Schicht 30 und Befestigungsvorrichtung bzw. zwischen Estrich-Schicht 30 und Boden 27 vermieden werden. Die Befestigungsvorrichtung steht mit ihren Vertikalschenkeln 20', 21' lediglich indirekt über das Dämmaterial 9', 11' mit der Estrich-Schicht 30 in Verbindung, wobei das Dämmaterial 9', 11' so ausgebildet ist, daß es eine Körperschalldämmung bewirkt. Auf diese Weise werden Schallbrücken zwischen Estrich-Schicht 30 und Boden 27 vollständig vermieden.

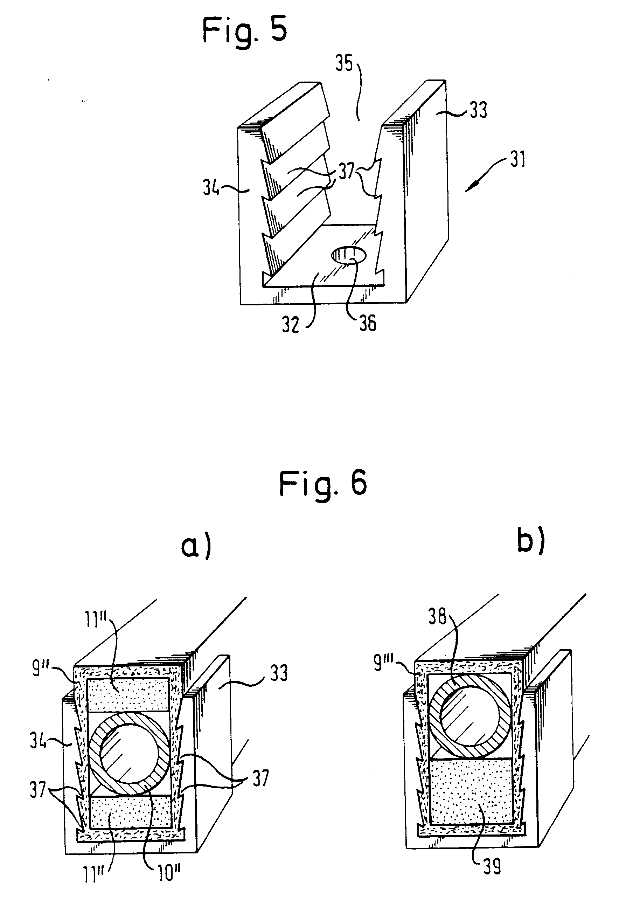

Figur 5 zeigt eine Vorrichtung zur bodenseitigen Befestigung von Rohren gemäß der dritten Lösungsvariante. Diese Vorrichtung besteht aus einem im wesentlichen U-förmigen Befestigungsbügel 31, welcher wiederum aus einem Basisbereich 32 und zwei sich senkrecht zu diesem erstreckenden und mit dem Basisbereich 32 verbundenen Schenkeln 33, 34 besteht.

Zwischen den einander zugewandten Oberflächen der beiden Schenkel 33, 34 ist ein Aufnahmebereich 35 für ein gedämmtes Rohr definiert.

Der Basisbereich 32 des Befestigungsbügels 31 ist in seinem mittleren Bereich mit einer Bohrung 36 zur Aufnahme einer Bodenschraube versehen.

Die beiden, gleiche Länge aufweisenden Schenkel 33, 34 sind an ihren einander zugewandten Oberflächen mit widerhakenähnlichen Sägezahnelementen 37 versehen, die einem Herausbewegen eines Rohres bzw. einer Rohrdämmung aus dem Aufnahmebereich 35 entgegenwirken.

Figur 6 a und 6 b zeigt jeweils ein mit einer Dämmung ummanteltes Rohr, welches in einer Befestigungsvorrichtung gemäß Figur 5 aufgenommen ist.

Das in Figur 6 a dargestellte Rohr 10" ist mit einer entsprechend Figur 2 ausgeführten Dämmung 9'', 11'' ummantelt.

Der Abstand der durch die widerhakenähnlichen Sägezahnelemente 37 gebildeten, einander zugewandten inneren Oberflächen der beiden Schenkel 33, 34 ist kleiner als die Horizontalabmessungen der rechteckigen Dämmhülse 9'', wodurch die Dämmhülse 9'' beim Einführen in den Aufnahmebereich der Befestigungsvorrichtung gemäß Figur 6 a leicht zusammengedrückt und somit unter Spannung von den Sägezahnelementen 37 wirksam in der Befestigungsvorrichtung gehalten wird.

Die vertikale Länge der beiden Schenkel 33, 34 ist so bemessen, daß sie entsprechend den Vertikalschenkeln 20', 21' gemäß Figur 4 nicht bis an den Bereich des Estrichs heranragen, wodurch sich eine Körperschallentkopplung zwischen Estrich und dem mit der Befestigungsvorrichtung verbundenen Boden ergibt.

Figur 6 b entspricht im wesentlichen Figur 6 a, wobei hier die Rohrdämmung etwas anders ausgeführt ist, da das Rohr 38 im oberen Bereich einer im Querschnitt rechteckigen Hülse 9''' aufgenommen ist, wobei ausschließlich der unterhalb des Rohres 38 zwischen Rohr 38 und den Innenflächen der Dämmhülse 9''' ausgebildete Zwischenraum mit zusätzlichem Dämmaterial 39 ausgefüllt ist, um so eine bessere Dämmung gegenüber dem Rohfußboden erzielen zu können.

## Patentansprüche

1. Vorrichtung zur bodenseitigen Befestigung von mit einer Wärme- und / oder Schalldämmung (9, 11) ummantelten Rohren (10), mit einem im wesentlichen U-förmigen Befestigungsbügel (1, 1'), der aus einem Basisbereich (2, 2') und zwei mit diesem verbundenen Schenkeln (3, 4, 3', 4') besteht und einen Aufnahmebereich (5) für ein Rohr (10) definiert und einer am dem Basisbereich (2, 2') abgewandten Endbereich eines Schenkels (4, 4') angeordneten, bodenseitig anbringbaren Befestigungslasche (6, 6'),
**dadurch gekennzeichnet**,
daß zumindest der Basisbereich (2, 2') an seiner dem Aufnahmebereich (5) abgewandten Oberfläche mit einem weichfedernden Dämmaterial (8, 8') belegt ist, das insbesondere aus einem Schaum oder einem Schaum-Vlies-Verbund besteht.

2. Vorrichtung nach Anspruch 1,
**dadurch gekennzeichnet**,
daß das Dämmaterial (8, 8') auf der dem Befestigungsbügel (1, 1') abgewandten Seite eine reißfeste Oberfläche aufweist.

3. Vorrichtung nach einem der vorhergehenden Ansprüche,
**dadurch gekennzeichnet**,
daß sich das Dämmaterial (8, 8') zumindest über einen dem Basisbereich (2, 2') zugewandten Teilbereich der Schenkelaußenflächen erstreckt, wobei die Schenkel (3, 4, 3', 4') und der gerade ausgebildete Basisbereich (2, 2') des Befestigungsbügels (1, 1') im wesentlichen rechtwinklig zueinander angeordnet sind.

4. Vorrichtung nach einem der vorhergehenden Ansprüche,
**dadurch gekennzeichnet**,
daß der mit der Befestigungslasche (6, 6') versehene erste Schenkel (4, 4') länger als der zweite Schenkel (3, 3') ist und daß die sich im wesentlichen senkrecht zum ersten Schenkel (4, 4') erstreckende Befestigungslasche (6, 6') mit einer Bohrung (7) zur bodenseitigen Befestigung der Lasche (6, 6') versehen ist.

5. Vorrichtung nach einem der vorhergehenden Ansprüche,
**dadurch gekennzeichnet**,
daß die Länge des mit der Befestigungslasche (6, 6') versehenen ersten Schenkels (4, 4') größer als der Abstand der beiden Schenkel (3, 4, 3', 4') voneinander ist.

6. Kombination aus einer Vorrichtung zur bodenseitigen Befestigung und einem mit einer Wärme- und / oder Schalldämmung (9', 11') ummantelten Rohr (10'),
**dadurch gekennzeichnet**,
daß die Vorrichtung aus einem Basiswinkel (16) und einem Auflagewinkel (17) besteht, die jeweils einander flächig berührende Horizontalschenkel (18, 19, 18', 19') aufweisen, welche derart miteinander koppelbar sind, daß ihre sich jeweils senkrecht zu den Horizontalschenkeln (18, 19, 18', 19') erstreckenden Vertikalschenkel (20, 21, 20', 21') parallel nebeneinander in unterschiedlichem Abstand zueinander justierbar sind, wobei zwischen den beiden Vertikalschenkeln (20, 21, 20', 21') ein Aufnahmebereich (26) für das Rohr (10') definiert ist, dessen durch die Schenkellängen bestimmte Höhe kleiner als die Vertikalabmessung des mit der Wärme- und/oder Schalldämmung ummantelten Rohres (9', 10', 11') ist, und daß die Länge des Horizontalschenkels (18, 18') des Basiswinkels (16) größer als die Länge des Horizontalschenkels (19, 19') des Auflagewinkels (17) ist.

7. Kombination nach Anspruch 6,
**dadurch gekennzeichnet**,
daß die Länge des Vertikalschenkels (21, 21') des Auflagewinkels (17) gleich der um die Stärke des Horizontalschenkels (18, 18') des Basiswinkels (16) verringerten Länge des Vertikalschenkels (20, 20') des Basiswinkels (16) ist, und daß insbesondere der Horizontalschenkel (18, 18') des Basiswinkels (16) mit einem sich in dessen Längsrichtung erstreckenden Langloch (22) und der Horizontalschenkel (19, 19') des Auflagewinkels (17) mit einer Bohrung (23) versehen ist.

8. Kombination nach Anspruch 6 oder 7,
**dadurch gekennzeichnet**,
daß die einander zugewandten Oberflächen der beiden Vertikalschenkel (20, 21, 20', 21') mit widerhakenähnlichen Elementen (25) versehen sind, die einem Herausbewegen des gedämmten Rohres (9', 10', 11') aus dem Aufnahmebereich (26) entgegenwirken.

9. Kombination aus einer Vorrichtung zur bodenseitigen Befestigung und einem mit einer Wärme- und / oder Schalldämmung (9", 11", 9‴, 39) ummantelten Rohr (10", 38), wobei die Vorrichtung einen im wesentlichen U-förmigen Befestigungsbügel (31) aufweist, der aus einem Basisbereich (32) und zwei mit diesem verbundenen Schenkeln (33, 34) besteht, und einen Aufnahmebereich (35) für das Rohr (10'', 38) definiert,
**dadurch gekennzeichnet**,
daß der Basisbereich (32) insbesondere mittels einer Schraubverbindung direkt mit dem Boden verbindbar und- die Länge der Schenkel (33, 34) kürzer als die Vertikalabmessungen des mit der Wärme- und/oder Schalldämmung ummantelten Rohres (9", 10", 11", 9‴, 38, 39) ist, wobei die beiden Schenkel (33, 34) vorzugsweise gleiche Länge aufweisen.

10. Kombination nach Anspruch 9,
**dadurch gekennzeichnet**,
daß der Abstand der einander zugewandten Oberflächen der beiden Schenkel (33, 34) kleiner als die Horizontalabmessungen des gedämmten Rohres (9", 10", 11", 9‴, 38, 39) ist, und daß die einander zugewandten Oberflächen der beiden Schenkel (33, 34) insbesondere mit widerhakenähnlichen Elementen (37) versehen sind, die einem Herausbewegen eines gedämmten Rohres (9", 10", 11", 9‴, 38, 39) aus dem Aufnahmebereich entgegenwirken.

## Claims

1. Apparatus for the floor-side mounting of pipes (10) sheathed with a thermal and/or acoustic insulation (9, 11) comprising a substantially U-shaped mounting yoke (1, 1') which consists of a base region (2, 2') and two limbs (3, 4, 3', 4') connected to the latter and which defines a receiving region (5) for a pipe (10), and an attachment lug (6, 6') which can be attached at the floor-side and which is arranged at an end region of a limb (4, 4') remote from the base region (2, 2'), characterized in that at least the base region (2, 2') is covered at its surface remote from the receiving region (5) with a softly resilient insulating material (8, 8'), which consists in particular of a foam or a foam/fleece composite.

2. Apparatus in accordance with claim 1, characterized in that the insulating material (8, 8') has a tear-resistant surface at the side remote from the mounting yoke (1, 1').

3. Apparatus in accordance with one the preceding claims, characterized in that the insulating material (8, 8') extends, at least over a part-region of the limb outer surfaces adjacent to the base region (2, 2'), with the limbs (3, 4, 3', 4') and the straight base region (2, 2') of the mounting yoke (1, 1') being arranged substantially at right angles to one another.

4. Apparatus in accordance with one of the preceding claims, characterized in that the first limb (4, 4') provided with the attachment lug (6, 6') is longer than the second limb (3, 3'), and in that the attachment lug (6, 6') extending substantially perpendicular to the first limb (4, 4') is provided with a bore (7) for the floor-side attachment of the lug (6, 6').

5. Apparatus in accordance with one of the preceding claims, characterized in that the length of the first limb (4, 4') provided with the attachment lug (6, 6') is greater than the spacing of the two limbs (3, 4, 3', 4') from one another.

6. Combination of an apparatus for the floor-side attachment and a pipe (10') sheathed with a thermal and/acoustic insulation (9', 11'), characterized in that the apparatus comprises a base angle (16) and a supported angle (17) which each have horizontal limbs (18, 19, 18', 19'), which contact one another over an area and which can be coupled to one another so that their vertical limbs (20, 21, 20', 21'), which each extend perpendicular to the horizontal limbs (18, 19, 18', 19'), are arranged in parallel alongside one another and are adjustable at a variable spacing to one another, wherein a mounting region (26) for the pipe (10') is defined between the two vertical limbs (20, 21, 20', 21'), the height of which determined by the limb lengths is smaller than the vertical dimension of the pipe (9', 10', 11') sheathed with thermal and/or acoustic insulation; and in that the length of the horizontal limb (18, 18') of the base angle (16) is greater than the length of the horizontal limb (19, 19') of the supported angle (17).

7. Combination in accordance with claim 6, characterized in that the length of the vertical limb (21, 21') of the supported angle (17) is the same as the length of the vertical limb (20, 20') of the base angle (16) reduced by the thickness of the horizontal limb (18, 18') of the base angle (16); and in that the horizontal limb (18, 18') of the base angle (16) is in particular provided with an elongate hole (22) extending in the longitudinal direction, and the horizontal limb (19, 19') of the supported angle (17) is provided with a bore (23).

8. Combination in accordance with claim 6 or claim 7, characterized in that the mutually confronting surfaces of the two vertical limbs (20, 21, 20', 21') are provided with barb-like elements (25) which act against the movement of the insulated pipe (9', 10', 11') out of the receiving region (26).

9. Combination of an apparatus for the floor-side attachment and a pipe (10", 38) sheathed with thermal and/or acoustic insulation (9", 11", 9"', 39), wherein the apparatus has a substantially U-shaped mounting yoke (31) which comprises a base region (32) and two limbs (33, 34) connected to the latter and which defines a receiving region (35) for the pipe (10", 38), characterized in that the base region (32) is directly connectable to the floor, in particular by means of a screw connection, and the length of the limbs (33, 34) is shorter than the vertical dimensions of the pipe (9", 10", 11", 9"', 38, 39) sheathed with the thermal and/or acoustic insulation, wherein the two limbs (33, 34) preferably have the same length.

10. Combination in accordance with claim 9, characterized in that the spacing of the mutually confronting surfaces of the two limbs (33, 34) is smaller than the horizontal dimensions of the insulated pipe (9", 10", 11", 9"', 38, 39); and in that the mutually confronting surfaces of the two limbs (33, 34) are in particular provided with barb-like elements (37) which counteract a movement of the insulated pipe (9", 10", 11", 9"', 38, 39) out of the mounting region.

## Revendications

1. Dispositif pour la fixation au sol de tubes (10) entourés d'une isolation thermique et/ou acoustique (9 , 11), comprenant un étrier de fixation (1, 1') sensiblement en forme de U, qui est constitué d'une zone de base (2, 2') et de deux bras (3, 4, 3', 4') reliés à cette zone de base, et qui définit une zone de réception (5) pour un tube (10), et comprenant une patte de fixation (6, 6') agencée dans la zone terminale d'un bras (4, 4') détournée de la zone de base (2, 2'), et susceptible d'être montée du côté du sol,
caractérisé en ce que
la zone de base au moins (2, 2') est revêtue sur sa surface détournée de la zone de réception (5) d'un matériau isolant (8, 8') à élasticité souple, qui est en particulier constitué d'une mousse ou d'un composite formé d'une mousse et d'un matériau en nappe.

2. Dispositif selon la revendication 1, caractérisé en ce que le matériau isolant (8, 8') présente une surface résistant à l'arrachement sur le côté détourné de l'étrier de fixation (1, 1').

3. Dispositif selon l'une des revendications précédentes, caractérisé en ce que le matériau isolant (8, 8') s'étend au moins sur une région partielle des surfaces extérieures des bras, tournée vers la zone de base (2, 2'), et en ce que les bras (3, 4, 3', 4') et la zone de base (2, 2') de l'étrier de fixation (1, 1'), réalisée rectiligne, sont agencés sensiblement à angle droit les uns par rapport aux autres.

4. Dispositif selon l'une des revendications précédentes, caractérisé en ce que le premier bras (4, 4') pourvu de la patte de fixation (6, 6') est plus long que le second bras (3, 3'), et en ce que la patte de fixation (6, 6') qui s'étend sensiblement perpendiculairement par rapport au premier bras (4, 4') est pourvue d'un perçage (7) pour la fixation au sol de la patte (6, 6').

5. Dispositif selon l'une des revendications précédentes, caractérisé en ce que la longueur du premier bras (4, 4') pourvu de la patte de fixation (6, 6') est plus élevée que la distance des deux bras (3, 4, 3', 4') l'un de l'autre.

6. Combinaison formée d'un dispositif pour la fixation au sol et d'un tube (10') entouré d'une isolation thermique et/ou acoustique (9', 11'),
caractérisée en ce que :
le dispositif est constitué d'une équerre de base (16) et d'une équerre de coiffe (17), lesquelles présentent chacune des bras horizontaux (18, 19, 18', 19') qui se touchent mutuellement à plat, lesdites équerres pouvant être accouplées mutuellement l'une à l'autre de telle manière que leurs bras verticaux (20, 21, 20', 21') qui s'étendent chacun perpendiculairement au bras horizontaux (18, 19, 18', 19') sont susceptibles d'être ajustés parallèlement l'un à l'autre à une distance différente l'un de l'autre, et entre les deux bras verticaux (20, 21, 20', 21') est définie une zone de réception (26) pour le tube (10'), dont la hauteur déterminée par la longueur des bras est plus petite que la dimension verticale du tube (9', 10', 11') entouré de l'isolation thermique et/ou acoustique, et en ce que la longueur du bras horizontal (18, 18') de l'équerre de base (16) est supérieure à la longueur du bras horizontal (19, 19') de l'équerre de coiffe (17).

7. Combinaison selon la revendication 6,
caractérisée en ce que :
la longueur du bras vertical (21, 21') de l'équerre de coiffe (17) est égale à la longueur du bras vertical (20, 20') de l'équerre de base (16), diminuée de l'épaisseur du bras horizontal (18, 18') de l'équerre de base (16), et en ce que en particulier le bras horizontal (18, 18') de l'équerre de base (16) est pourvu d'un perçage oblong (22) qui s'étend dans sa direction longitudinale, et le bras horizontal (19, 19') de l'équerre de coiffe (17) est pourvu d'un perçage (23).

8. Combinaison selon l'une ou l'autre des revendications 6 et 7,
caractérisé en ce que les surfaces tournées l'une vers l'autre des deux bras verticaux (20, 21, 20', 21') sont pourvues d'éléments (25) analogues à des contre-crochets, qui s'opposent à un déplacement de sortie du tube isolé (9', 10', 11') hors de la zone de réception (26).

9. Combinaison formée d'un dispositif pour la fixation au sol et d'un tube (10", 38) entouré d'une isolation thermique et/ou acoustique (9", 11", 9‴, 39), le dispositif comprenant un étrier de fixation (31) sensiblement en forme de U, lequel est constitué d'une zone de base (32) et de deux bras (33, 34) reliés à celle-ci, et définit une zone de réception (35) pour le tube (10", 38),
caractérisée en ce que :
la zone de base (32) est susceptible d'être reliée directement avec le sol, en particulier au moyen d'une liaison à vis, et en ce que la longueur des bras (33, 34) est plus courte que les dimensions verticales du tube (9", 10", 11", 9‴, 38, 39), entouré de l'isolation thermique et/ou acoustique, les deux bras (33, 34) présentant de préférence la même longueur.

10. Combinaison selon la revendication 9,
caractérisée en ce que :
la distance des surfaces tournées l'une vers l'autre des deux branches (33, 34) est plus petite que les dimensions horizontales du tube isolé (9, 10", 11", 9‴, 38, 39), et en ce que les surfaces tournées l'une vers l'autre des deux bras (33, 34) sont pourvues en particulier d'éléments (37) analogues à des contre-crochets, qui s'opposent à un mouvement de sortie d'un tube isolé (9", 10", 11", 9‴, 38, 39) hors de la zone de réception.
